(19) Europäisches Patentamt
European Patent Office
Office européen des brevets

(11) Publication number: **0 304 492 B1**

# (12) EUROPEAN PATENT SPECIFICATION

(45) Date of publication of patent specification: **07.12.94**

(51) Int. Cl.[5]: **A01N 57/10**, A01N 25/22

(21) Application number: **88902538.3**

(22) Date of filing: **10.03.88**

(86) International application number:
**PCT/JP88/00252**

(87) International publication number:
**WO 88/06842 (22.09.88 88/21)**

## (54) STABLE SOLID PESTICIDAL PREPARATION.

(30) Priority: **13.03.87 JP 59164/87**

(43) Date of publication of application:
**01.03.89 Bulletin 89/09**

(45) Publication of the grant of the patent:
**07.12.94 Bulletin 94/49**

(84) Designated Contracting States:
**FR GB NL**

(56) References cited:
**JP-A- 5 366 430**
**JP-A- 5 583 704**
**JP-A-53 104 733**

**PATENT ABSTRACTS OF JAPAN, vol. 4, no. 93 (C-17)[575], 5th July 1980, page 16 C17; & JP-A-55 055 103 (SUMITOMO KAGAKU KOGYO K.K.) 202.04.1980**

**Translation of JP-A-55 055 103**

**Translation of Jap. Examined Publication No. 47-39343;**

(73) Proprietor: **SUMITOMO CHEMICAL COMPANY, LIMITED**
**Kitahama 4-chome 5-33**
**Chuo-ku Osaka 541 (JP)**

(72) Inventor: **KATAYAMA, Yasuyuki**
**2-14-7, Mefu**
**Takarazuka-shi**
**Hyogo 665 (JP)**
Inventor: **HORIDE, Fumio**
**4-2-3, Niina Minoo-shi**
**Osaka 562 (JP)**

(74) Representative: **Henkel, Feiler, Hänzel & Partner**
**Möhlstrasse 37**
**D-81675 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

### TECHNICAL FIELD

The present invention relates to solid formulations such as wettable powders, dusts, granules, etc., and more particularly, to a stabilized pesticidal solid formulation containing a synthetic benzyl ester pyrethroid having a cyano group at the α-position (hereinafter referred to as pyrethroid) and an organophosphorus acid ester compound.

### BACKGROUND ART

Pesticides now in use are usually formulated into various formulations so as to exert the efficacy of the active ingredient by simple and efficient applications.

Of these various formulations, solid formulations can easily be prepared by having the active ingredient and necessary auxiliaries mixed with, or adsorbed or adhered to, a suitable mineral carrier.

The decomposition with the lapse of time of the active ingredient contained in pesticides may be the causes of lowering in the efficacy of pesticides, unexpected phytotoxicity owing to the decomposition product and remarkable deterioration in the quality of pesticides. Because of this, it becomes necessary to apply pesticides in increased dosage rates or more frequently, or to take measures for preventing secondary harm to useful plants, which requires extra expense and labor.

Further, when pesticides, because of their instability, cannot be stored for a long period of time, they are unsuitable for mass production on industrial scales. Thus, whether or not the active ingredient changes in quality with the lapse of time and a method for preventing this change are subjects which should always be examined.

Generally, when solid formulations containing a pyrethroid and an organophosphorus acid ester compound are packed particularly in a highly gas-tight container such as aluminum-polyethylene laminate bag, it was found that there is a possibility that decomposition of the pyrethroid occurs during long-term storage under high-temperature environments.

DE-A-2 757 768 discloses the synergistic effect of certain combinations of a pyrethroid insecticide with organophosphorus compounds.

PATENT ABSTRACTS OF JAPAN, vol.4, no. 93 (C-17)[575], 5th July 1980, page 16, C17; & JP-A-55 055 103 describe the stabilisation of α-cyano benzyl ester pyrethroids into solid insecticidal formulations by adding inter alia monovalent alkali metal salts of $C_{6-18}$ monocarboxylic acids or monovalent alkali metal salts of anorganic weak acids.

Japanese Examined Publication No. 47-39343 relates to the stabilisation of Diazinon ® (O,O-diethyl-O-2-isopropyl-4-methylpyrimidyl-6-thiophosphate) and to related pyrimidyl containing pesticidal organophosphoric acid esters, by the addition of an alkali salt of an anorganic acid having a dissociation index of 2 or greater or an alkali salt of an $C_1$-$C_7$ organic acid.

Furthermore, said document discloses that the known stabilizers effectively suppressing the decomposition of Methylparathion ® (O,O-dimethyl-O-p-nitrophenylthiophosphate) or Malathion ® (O,O-dimethyl-S-(1,2-dicarbethoxyethyl)-diethylphosphate) have no effect at all on Diazinon ® and that none of the Diazinon ® stabilizers was able to stabilize Methylparathion (and consequently Malathion ®).

### DISCLOSURE OF INVENTION

The present inventors have extensively studied on solid formulations containing a pyrethroid and an organophosphorus acid ester compound and being superior in the stability of the active ingredients, and as a result, have found that the expected object can be attained by adding the alkali or alkaline earth metal salts of weak acids as a stabilizing agent. The present inventors thus completed the present invention.

The present invention provides a stabilized solid formulation of pesticide according to claim 1, which is excellent in the stability of the pyrethroid with the stability of the organophosphorus acid ester compound being not damaged.

### BEST MODE FOR CARRYING OUT THE INVENTION

The pyrethroid referred to in the present invention is the ester of an α-cyanobenzyl alcohol, for example, represented by the formula (I),

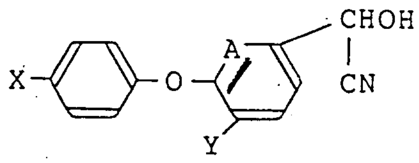

(I)

wherein A is a CH-group or a nitrogen atom, X is a hydrogen or halogen atom, and Y is a hydrogen or fluorine atom, with the carboxylic acid moiety of pyrethroidal insecticidal compounds, i.e. a carboxylic acid such as cyclopropane-carboxylic acids, substituted phenylacetic acids, etc., and further specifically, the following compounds may be mentioned. Of course, the pyrethroid of the present invention is not limited to these compounds, and also it is a matter of course that the pyrethroid includes the geometrical and optical isomers of these compounds and mixtures of these isomers in any proportion.

| Compound No. | Name of compound |
|---|---|
| (1) | α-Cyano-3-phenoxybenzyl 2-(4-chlorophenyl)-3-methylbutyrate |
| (2) | (S)-α-cyano-3-phenoxybenzyl (S)-2-(4-chlorophenyl)-3-methylbutyrate |
| (3) | α-Cyano-3-phenoxybenzyl 2,2,3,3-tetramethylcyclopropanecarboxylate |
| (4) | α-Cyano-3-phenoxybenzyl 2,2-dimethyl-3-(2,2-dichlorovinyl)cyclopropanecarboxylate |
| (5) | α-Cyano-3-(4-bromophenoxy)benzyl 2,2-dimethyl-3-(2,2-dichlorovinyl)cyclopropanecarboxylate |
| (6) | α-Cyano-3-(4-fluorophenoxy)benzyl 2,2-dimethyl-3-(2,2-dichlorovinyl)cyclopropanecarboxylate |
| (7) | α-Cyano-3-(3-bromophenoxy)benzyl 2,2-dimethyl-3-(2,2-dichlorovinyl)cyclopropanecarboxylate |
| (8) | α-Cyano-3-(4-chlorophenoxy)benzyl 2,2-dimethyl-3-(2,2-dichlorovinyl)cyclopropanecarboxylate |
| (9) | α-cyano-3-phenoxybenzyl chrysanthemate |

(10) α-Cyano-3-(4-bromophenoxy)benzyl 2-(4-chlorophenyl)-3-methylbutyrate

(11) α-Cyano-3-(3-bromophenoxy)benzyl 2-(4-chlorophenyl)-3-methylbutyrate

(12) α-Cyano-3-(4-chlorophenoxy)benzyl 2-(4-chlorophenyl)-3-methylbutyrate

(13) α-Cyano-3-(4-fluorophenoxy)benzyl 2-(4-chlorophenyl)-3-methylbutyrate

(14) α-Cyano-3-phenoxybenzyl 2-(4-bromophenyl)-3-methylbutyrate

(15) α-Cyano-3-phenoxybenzyl 2-(4-tert-butylphenyl)-3-methylbutyrate

(16) α-Cyano-3-phenoxybenzyl 2-(3,4-methylenedioxyphenyl)-3-methyl-butyrate

(17) (S)-α-cyano-m-phenoxybenzyl (1R, 3R)-2,2-dimethyl-3-(2,2-dibromovinyl)-cyclopropanecarboxylate

(18) α-Cyano-(4-fluoro-3-phenoxybenzyl) 2,2-dimethyl-3-(2,2-dichlorovinyl)cyclo-propanecarboxylate

(19) α-Cyano-3-phenoxybenzyl 2-chloro-4-(trifluoromethyl)anilino-3-methylbutyrate

(20) Cyano-(5-phenoxy-2-pyridyl)methyl 2,2-dimethyl-3-(2,2-dichlorovinyl)cyclo-propanecarboxylate

| | |
|---|---|
| (21) | α-Cyano-3-phenoxybenzyl 2,2-dimethyl-3-(1,2,2,2-tetrabromoethyl)cyclopropanecarboxylate |
| (22) | α-Cyano-3-phenoxybenzyl 2,2-dimethyl-3-(1,2-dichloro-3,3-dibromo)cyclopropanecarboxylate |
| (23) | α-Cyano-3-phenoxybenzyl 1-(4-ethoxyphenyl)-2,2-dichlorocyclopropane-1-carboxylate |
| (24) | α-Cyano-3-phenoxybenzyl 2,2-dimethyl-3-(2-chloro-3-trifluoromethylvinyl)cyclopropanecarboxylate |
| (25) | α-Cyano-3-phenoxybenzyl 2-(4-difluoromethoxyphenyl)-3-methylbutyrate |

Further, as the organophosphorus acid ester compound, there are mentioned, the following compounds

| Compound No. | Name of compound |
|---|---|
| (26) | O,O-dimethyl S-(1,2-dicarboethoxy)-ethylphosphorodithioate, |
| (27) | O,O-dimethyl S-methylcarbamoylmethylphosphorodithioate, |
| (28) | 2-Methoxy-4H-1,3,2-benzodioxaphosphorine-2-sulfide and |
| (29) | O,O-dimethyl S-(α-ethoxycarbonylbenzyl)phosphorodithioate. |

The contents of the pyrethroid and organophosphorus acid ester compound in the solid formulations of the present invention are generally from about 0.1 to about 10 wt. % and from about 5 to about 50 wt. %, respectively, but these contents may properly be changed depending upon intended uses.

As examples of the mineral carrier used in preparing the solid formulations, there may be mentioned diatomaceous earth, zeolite, bentonite, kaolinite clays, sericite clays, attapulgite, pyrophyllite, synthetic hydrated silicon dioxide (white carbon), etc. which are commonly used in pesticidal formulations.

The stabilizing agent used in the present invention is the alkali or alkaline earth metals salts of the weak acids such as for example alkaline earth metal carbonates, acetates and silicates, and alkali or alkaline earth metal phosphate, borates and citrates. Further specifically, there may be mentioned calcium carbonate, magnesium carbonate, barium carbonate, calcium acetate, magnesium acetate, calcium silicate, talc, calcium-bentonite, sodium phosphate, disodium hydrogenphosphate, calcium dihydrogenphosphate, sodium polyphosphate, sodium pyrophosphate, sodium tripolyphosphate, sodium borate, sodium citrate, etc.

As to the amount of the stabilizing agent added, although it depends upon the kind of the agent, a range of from about 3 to about 40 parts by weight based on 100 parts by weight of the organophosphorus acid ester compound will suffice from the standpoints of the stability of active ingredient and formulation. The amount, however, is not limited to this range.

In the present invention, there may be incorporated pesticidal active ingredients other than the pyrethroid and organophosphorus acid ester compound and auxiliaries necessary according to various types of formulations such as wettable powders, dusts, granules, etc.

The present invention will be illustrated in more detail with reference to the following formulation examples, comparative examples and test examples.

Hereupon, the pyrethroid and organophosphorus acid ester compound, which are an active ingredient, are shown by the foregoing Compound No., and all parts are by weight.

Formulation example 1

3 Parts of a pyrethroid (1) and 30 parts of an organophosphorus acid ester compound (26) are mixed with 5 parts of Sorpol ® 5060 (surface active agent produced by Toho Kagaku Co., Ltd.), 30 parts of Tokusil ® GU-N (white carbon produced by Tokuyama Soda Co., Ltd.) and 5 parts of each of the stabilizing agents shown in Table 1 described later, and the whole is made up to 100 parts with a kaolinite clay. After mixing, each mixture is finely pulverized to obtain a wettable powder of the present invention.

Formulation example 2

0.5 Part of a pyrethroid (2) and 10 parts of an organophosphorus acid ester compound (29) are mixed with 10 parts of Tokusil ® GU-N (described above) and 1 part of each of calcium carbonate and sodium polyphosphate, and the whole is made up to 100 parts with a kaolinite clay. After mixing, each mixture is finely pulverized to obtain a dust of the present invention.

Formulation example 3

1 Part of a pyrethroid (4) and 5 parts of an organophosphorus acid ester compound (26) are mixed with 1 part of Sorpol ® 5029-0 (surface active agent produced by Toho Kagaku Co., Ltd.), 5 parts of Tokusil ® GU-N (described above), 30 parts of bentonite and 0.5 part of talc, and the whole is made up to 100 parts with a kaolinite clay. After mixing, the mixture is granulated to obtain a granule of the present invention.

Formulation example 4

3 Parts of each of pyrethroids (2), (3), (4), (9) and (17) and 30 parts of each of organophosphorus acid ester compounds (26), (28), (29) and (31) are mixed with 5 parts of Sorpol ® 5060 (described above), 30 parts of Tokusil ® GU-N (described above) and 5 parts of calcium carbonate, and the whole is made up to 100 parts with a kaolinite clay. After mixing, each mixture is finely pulverized to obtain a wettable powder of the present invention.

Formulation example 5

3 Parts of a pyrethroid (2) and 30 parts of an organophosphorus acid ester compound (26) are mixed with 5 parts of Sorpol ® 5060 (described above), 30 parts of Tokusil R GU-N (described above) and from 1 to 10 parts of each of calcium carbonate, disodium hydrogenphosphate, sodium tripolyphosphate and calcium silicate, and the whole is made up to 100 parts with a kaolinite clay. After mixing, each mixture is finely pulverized to obtain a wettable powder of the present invention.

Formulation example 6

3 Parts of a pyrethroid (2) and 30 parts of an organophosphorus acid ester compound (26) are mixed with 5 parts of Sorpol ® 5060 (described above) and 30 parts of Tokusil ® GU-N (described above), and the whole is made up to 100 parts with calcium carbonate. After mixing, the mixture is finely pulverized to obtain a wettable powder of the present invention.

Formulation example 7

3 Parts of each of pyrethroids (2), (3), (4), (9), (24) and (25) and 30 parts of each of organophosphorus acid ester compounds (26), (27), (29) and (31) are mixed with 5 parts of Sorpol ® 5060 (described above), 30 parts of Tokusil ® GU-N (described above) and 5 parts of sodium polyphosphate, and the whole is made up to 100 parts with a kaolinite clay. After mixing, each mixture is finely pulverized to obtain a wettable powder of the present invention.

Comparative example 1

3 Parts of each of pyrethroids (1), (2), (3), (4), (9), (17), (24) and (25) and 30 parts of each of organophosphorus acid ester compounds (26), (27), (28), (29) and (31) are mixed with 5 parts of Sorpol ® 5060 (described above) and 30 parts of Tokusil ® GU-N (described above), and the whole is made up to 100 parts with a kaolinite clay. After mixing, each mixture is finely pulverized to obtain a mixed wettable powder of the pyrethroid and organophosphorus acid ester compound.

Comparative Example 2

0.5 Part of a pyrethroid (2) and 5 parts of an organophosphorus acid ester compound (29) are mixed with 10 parts of Tokusil ® GU-N (described above), and the whole is made up to 100 parts with a kaolinite clay. After mixing, the mixture is finely pulverized to obtain a mixed dust of the pyrethroid and organophosphorus acid ester compound.

Test example 1

Each of the wettable powders (having a composition described in Table 1) obtained in Formulation example 1 and Comparative example 1 was packed in an airtight aluminum-polyethylene laminate bag and stored for 1 month in a constant-temperature apparatus kept at 60 °C. Thereafter, the remaining percentages (the percentages of the amounts of the respective active ingredients remained without having been decomposed) were examined by gas chromatography. The results are shown in Table 1.

Table 1

| Stabilizing agent | Remaining percentage after storage at 60 ° C for 1 month (%) | |
|---|---|---|
| | Pyrethroid (1) | Organophosphorus acid ester compound (26) |
| No addition | 60.4 | 81.4 |
| Calcium carbonate | 97.7 | 87.4 |
| Magnesium carbonate | 96.1 | 87.2 |
| Barium carbonate | 94.9 | 84.3 |
| Calcium silicate | 98.8 | 87.8 |
| Calcium acetate | 92.4 | 78.4 |
| Disodium hydrogenphosphate | 94.7 | 83.1 |
| Calcium dihydrogenphosphate | 93.5 | 85.5 |
| Sodium phosphate | 92.4 | 88.9 |
| Sodium borate•decahydrate | 95.4 | 85.5 |
| Sodium polyphosphate | 99.9 | 93.4 |
| Talc | 94.5 | 93.4 |
| Sodium citrate | 93.6 | 78.5 |

Test example 2

Each of the dusts obtained in Formulation example 2 and Comparative example 2 was packed in an airtight aluminum-polyethylene laminate bag and stored for 2 weeks in a constant-temperature apparatus kept at 60 ° C. Thereafter, the remaining percentages of the active ingredients were examined by gas chromatography. The results are shown in Table 2.

Table 2

| Stabilizing agent | Remaining percentage after storage at 60 ° C for 2 weeks (%) | |
|---|---|---|
| | Pyrethroid (2) | Organophosphorus acid ester compound (29) |
| No addition | 62.0 | 97.4 |
| Calcium carbonate | 81.8 | 97.5 |
| Sodium polyphosphate | 87.3 | 97.8 |

Test example 3

Each of the wettable powders (having a composition described in Table 3) obtained in Formulation example 4 and Comparative example 1 was packed in an airtight aluminum-polyethylene laminate bag and stored for 1 month in a constant-temperature apparatus kept at 60 ° C. Thereafter, the remaining percentages of the active ingredient were examined by gas chromatography. The results are shown in Table 3.

Table 3

| Pyrethroid | Organophosphorus acid ester compound | Storage condition | No addition | | Addition of 5% calcium carbonate | |
|---|---|---|---|---|---|---|
| | | | a | b | a | b |
| (2) | (28) | 50°C, 14 days | 80.3 | 83.7 | 99.9 | 89.8 |
| (2) | (31) | 60°C, 14 days | 25.7 | 88.6 | 82.2 | 86.8 |
| (3) | (26) | 60°C, 1 month | 80.8 | 87.1 | 98.0 | 88.3 |
| (4) | (26) | 60°C, 1 month | 87.5 | 88.1 | 96.4 | 87.3 |
| (4) | (29) | 60°C, 20 days | 69.0 | 84.9 | 97.1 | 89.3 |
| (9) | (26) | 60°C, 1 month | 88.5 | 91.2 | 96.4 | 86.6 |
| (17) | (26) | 60°C, 1 month | 89.8 | 89.5 | 98.9 | 94.5 |

a: Remaining percentage of pyrethroid (%)

b: Remaining percentage of organophosphorus acid ester compound

Test example 4

Each of the wettable powders (having a composition described in Table 4) obtained in Formulation example 5 and Comparative example 1 was packed in an airtight aluminum-polyethylene laminate bag and stored for 1 month in a constant-temperature apparatus kept at 60 ° C. Thereafter, the remaining percentages of the active ingredients were examined by gas chromatography. The results are shown in Table 4.

Table 4

| Stabilizing agent | Amount of stabilizing agent added (part by weight) | Remaining percentage after storage at 60°C for 1 month (%) | |
|---|---|---|---|
| | | Pyrethroid (2) | Organophosphorus acid ester compound (26) |
| No addition | 0 | 62.5 | 82.1 |
| Calcium carbonate | 1 | 97.3 | 86.5 |
| Calcium carbonate | 2 | 97.1 | 85.8 |
| Calcium carbonate | 3 | 97.7 | 87.3 |
| Calcium carbonate | 5 | 97.7 | 87.4 |
| Calcium carbonate | 10 | 97.2 | 88.2 |
| Calcium silicate | 1 | 87.9 | 83.9 |
| Calcium silicate | 3 | 96.2 | 79.8 |
| Disodium hydrogenphosphate | 1 | 88.3 | 86.4 |
| Disodium hydrogenphosphate | 2 | 94.2 | 86.1 |

- cont'd -

Table 4 (cont'd)

| | | | |
|---|---|---|---|
| Disodium hydrogenphosphate | 3 | 96.2 | 86.7 |
| Sodium tripolyphosphate | 1 | 87.0 | 86.4 |
| Sodium tripolyphosphate | 2 | 90.4 | 87.2 |
| Sodium tripolyphosphate | 3 | 93.9 | 87.7 |
| Sodium tripolyphosphate | 4 | 94.8 | 88.0 |
| Sodium tripolyphosphate | 5 | 95.6 | 88.0 |
| Sodium tripolyphosphate | 10 | 98.1 | 88.1 |

Test example 5

Each of the wettable powders (having a composition described in Table 5) obtained in Formulation example 6 and Comparative example 1 was packed in an airtight aluminum-polyethylene laminate bag and stored for 1 month in a constant-temperature apparatus kept at 60 °C. Thereafter, the remaining percentages of the active ingredients were examined by gas chromatography. The results are shown in Table 5.

Table 5

| Pyrethroid | Organophosphorus acid ester compound | Stabilizing agent | Remaining percentage after storage at 60°C for 1 month (%) | |
|---|---|---|---|---|
| | | | Pyrethroid (2) | Organophosphorus acid ester compound (26) |
| (2) | (26) | No addition | 62.5 | 82.1 |
| (2) | (26) | Calcium carbonate | 98.5 | 85.3 |

Test example 6

Each of the wettable powders (having a composition described in Table 6) obtained in Formulation example 7 and Comparative example 1 was packed in an airtight aluminum-polyethylene laminate bag and stored for 1 month in a constant-temperature apparatus kept at 60°C. Thereafter, the remaining percentages of the active ingredients were examined by gas chromatography. The results are shown in Table 6.

Table 6

| Pyrethroid | Organophosphorus acid ester compound | Storage condition | No addition | | Addition of 5% calcium carbonate | |
|---|---|---|---|---|---|---|
| | | | a | b | a | b |
| (2) | (27) | 50°C, 20 days | 49.5 | 50.6 | 84.8 | 60.5 |
| (2) | (29) | 60°C, 20 days | 64.2 | 83.8 | 96.9 | 85.1 |
| (2) | (31) | 60°C, 14 days | 25.7 | 88.6 | 83.4 | 87.8 |
| (3) | (26) | 60°C, 1 month | 80.8 | 87.1 | 99.3 | 87.8 |
| (4) | (26) | 60°C, 1 month | 87.5 | 88.1 | 98.2 | 88.6 |
| (4) | (27) | 50°C, 20 days | 41.3 | 49.4 | 82.1 | 62.3 |
| (4) | (29) | 60°C, 20 days | 69.0 | 84.9 | 96.1 | 89.8 |
| (9) | (26) | 60°C, 1 month | 88.5 | 91.2 | 97.3 | 91.4 |
| (24) | (26) | 60°C, 1 month | 65.1 | 79.7 | 95.7 | 84.7 |
| (25) | (26) | 60°C, 1 month | 56.7 | 77.6 | 97.3 | 81.8 |

a: Remaining percentage of pyrethroid (%)

b: Remaining percentage of organophosphorus acid ester compound (%)

INDUSTRIAL APPLICABILITY

According to the present invention, there is obtained a solid formulation superior as pesticide having an improved stability of the pyrethroid with the organophosphorus acid ester compound being kept stable.

## Claims

1. A solid pesticidal formulation comprising as the active ingredients supported on a mineral carrier
   (A) a synthetic benzyl ester pyrethroid having a cyano group at the α-position,
   (B) a pesticidal organophosphorous acid ester compound selected from the group of of the compounds O,O-dimethyl-S-(1,2-dicarboethoxy)-ethylphosphorodithioate, O,O-dimethyl-S-methylcarbamoyl-methylphosphorodithioate, 2-methoxy-4H-1,3,2-benzodioxaphosphorine-2-sulfide and O,O-dimethyl-S-(α-ethoxycarbonylbenzyl)phosphorodithioate, and
   (C) about 3 to about 40 parts by weight based on 100 parts by weight of the organophosphorous acid ester compound of at least one of alkali or alkaline earth metal salts of weak acids as stabilizing agent.

2. The pesticidal solid formulation according to Claim 1, wherein the salt of weak acids are the alkaline earth metal carbonates, acetates or silicates.

3. The pesticidal solid formulation according to Claim 1, wherein the salt of weak acids are the alkali or alkaline earth metal phosphates.

4. The pesticidal solid formulation according to Claim 1, wherein the salt of weak acids are the alkali metal borates.

5. The pesticidal solid formulation according to Claim 1 or 2, wherein the salt of weak acid is calcium carbonate, magnesium carbonate or barium carbonate.

6. The pesticidal solid formulation according to Claim 1 or 3, wherein the salt of weak acid is sodium phosphate, disodium hydrogenphosphate, sodium polyphosphate or sodium tripolyphosphate.

## Patentansprüche

1. Feste Pestizidzubereitung, umfassend als die auf einen Mineralträger aufgetragenen aktiven Bestandteile:
   (A) ein synthetisches Benzylesterpyrethroid mit einer Cyanogruppe in α-Stellung;
   (B) eine pestizidwirksame organische Phosphorsäureesterverbindung, ausgewählt aus der Gruppe der Verbindungen O,O-Dimethyl-S-(1,2-dicarboethoxy)-ethylphosphorodithioat, O,O-Dimethyl-S-methylcarbamoyl-methylphosphorodithioat, 2-Methoxy-4H-1,3,2-benzodioxaphosphorin-2-sulfid und O,O-Dimethyl-S-(α-ethoxycarbonylbenzyl)phosphorodithioat, und
   (C) etwa 3 bis etwa 40 Gewichtsteile, bezogen auf 100 Gewichtsteile der organischen Phosphorsäureesterverbindung, mindestens eines Alkali- oder Erdalkalimetallsalzes schwacher Säuren als Stabilisator.

2. Feste Pestizidzubereitung nach Anspruch 1, wobei das Salz schwacher Säuren aus den Erdalkalimetallcarbonaten, -acetaten oder -silicaten besteht.

3. Feste Pestizidzubereitung nach Anspruch 1, wobei das Salz schwacher Säuren aus den Alkali- oder Erdalkalimetallphosphaten besteht.

4. Feste Pestizidzubereitung nach Anspruch 1, wobei das Salz schwacher Säuren aus den Alkalimetallboraten besteht.

5. Feste Pestizidzubereitung nach Anspruch 1 oder 2, wobei das Salz einer schwachen Säure aus Calciumcarbonat, Magnesiumcarbonat oder Bariumcarbonat besteht.

6. Feste Pestizidzubereitung nach Anspruch 1 oder 3, wobei das Salz einer schwachen Säure aus Natriumphosphat, Dinatriumhydrogenphosphat, Natriumpolyphosphat oder Natriumtripolyphosphat besteht.

## Revendications

1. Composition pesticide solide comprenant comme ingrédients actifs supportés sur un support minéral
   a) un pyréthroïde synthétique qui est un ester benzylique comportant un groupement cyano en position α,
   B) un dérivé ester d'acide organophosphoré pesticide choisi dans le groupe des composés : phosphorodithioate de O,O-diméthyle et de S-(1,2-dicarboéthoxy)éthyle, phosphorodithioate de O,O-diméthyle et de S-méthylcarbamoylméthyle, 2-méthoxy-4H-1,3,2-benzodioxaphosphorine-2-sulfure et phosphorodithioate de O,O-diméthyle et de S-(α-éthoxycarbonylbenzyle), et
   C) environ 3 à environ 40 parties en poids, pour 100 parties en poids du dérivé ester d'acide organophosphoré, d'au moins un des sels de métaux alcalins ou alcalino-terreux d'acides faibles en tant qu'agent stabilisant.

2. Composition pesticide solide selon la revendication 1, dans laquelle les sels d'acides faibles sont les carbonates, acétates ou silicates de métaux alcalino-terreux.

3. Composition pesticide solide selon la revendication 1, dans laquelle les sels des acides faibles sont les phosphates de métaux alcalins ou alcalino-terreux.

4. Composition pesticide solide selon la revendication 1, dans laquelle les sels d'acides faibles sont les borates de métaux alcalins.

5. Composition pesticide solide selon la revendication 1 ou 2, dans laquelle les sels d'acides faibles sont le carbonate de calcium, le carbonate de magnésium ou le carbonate de baryum.

6. Composition pesticide solide selon la revendication 1 ou 3, dans laquelle les sels d'acides faibles sont le phosphate de sodium, l'hydrogénophosphate disodique, le polyphosphate de sodium ou le tripolyphosphate de sodium.